# EUROPEAN PATENT APPLICATION

(11) **EP 1 170 922 A1**
(43) Date of publication of application: **09.01.2002**
(21) Application number: 00610066.3
(22) Date of filing: 03.07.2000
(51) Int. Cl.: H04L 29/06, H04M 1/725, H04N 5/74

(54) **A method of controlling a display device, a display system, a display apparatus, and an electronic accessory device for controlling a display device**

(71) Applicant: Telefonaktiebolaget L M Ericsson (Publ), 126 25 Stockholm (SE)
(72) Inventor: Borgström, Anders, 239 32 Skanör (SE); Hollström, Magnus, 222 41 Lund (SE); Gärdenfors, Torbjörn, 211 50 Malmö (SE)
(74) Representative: Boesen, Johnny Peder

(57) **Abstract**

A display device (1; 31), capable of providing visual displays (2) from electrical input signals, is controlled by means of a presentation application program adapted to convert data files representing images to be displayed into electrical input signals for the display device. Instructions are transmitted to said presentation application program from a portable telecommunications device (5; 75) having an information access program for accessing a global information network, and a communication application program for communication with said information access program, and for controlling the presentation application program, is executed. In this way the display device can be controlled from the portable telecommunications device instead of a PC. A user does not have to carry a PC to the presentation location, and the need to struggle with a good deal of setting up before a presentation can be shown is avoided.

## Description

### Technical Field of the Invention

The invention relates to a method of controlling a display device, capable of providing visual displays from electrical input signals, by means of a presentation application program adapted to convert data files representing images to be displayed into electrical input signals for said display device. The invention further relates to a display system, a display apparatus and an electronic accessory device.

### Description of Related Art

For many years slide projectors have been known in which lantern-slides can be placed between a light source and an optical system and thus be projected onto e.g. a white wall or similar. This type of slides has to be prepared in good time before the presentation of a slide show, because each slide has to be processed in a chemical process. Also overhead projectors are well known. Here, a foil of transparent material is placed on top of the overhead projector and an illustration can be prepared directly while it is projected onto a screen. However, it is very difficult to obtain a professional look of such directly made overheads. Overheads may also be prepared in advance, but then the situation is similar to the lantern-slide projector.

These problems have been solved to a certain degree by projectors or other display devices which are connectable to e.g. a personal computer (PC) and thus controllable by electrical signals from the computer. Normally this type of projector accepts the same type of input signals as a normal monitor for the PC (e.g. a VGA signal) and, therefore, an illustration can be shown simultaneously on the monitor and on the screen on which the projector projects the image. Each illustration, corresponding to a slide, is prepared by means of a presentation application program, such as Microsoft's PowerPoint, running on the PC. When a presentation has been created by means of the presentation application program, it can be shown directly on the screen. It can even be shown during its creation. Alternatively, it is stored as a data file which can be read and presented by the presentation application program at a later time, which is the most normal situation.

People making many presentations, e.g. sales persons or engineers, are faced with the problem that in order to utilize this type of projector they must carry their PC to the location of the presentation, and before they can begin their slide show, they have to struggle with a good deal of setting up, including the need for a wired connection from the computer to the projector. Of course, they could also carry their data files on e.g. a diskette or a CD-ROM, but then they would have to rely on the presence of a computer already connected to the projector in the presentation room. Even if such a computer was present, it is always difficult to use a computer which is not set up similarly to your own, and there is also a risk that the presentation application program installed on that computer could be of a type or version different from your own, with the consequence that the presentation cannot be shown. Therefore, in practice the presenter has to carry his own PC to the presentation location.

Therefore, it is an object of the invention to provide a method of the above-mentioned type in which such a display device can be controlled by a user without having to carry a PC to the presentation location and without the need to struggle with a good deal of setting up before a presentation can be shown

From a different technical area WO98/49815 discloses a method in which numerical and textual data intended to be displayed on a small display of a mobile telephone can be transmitted to a larger remote display monitor, such as a television set or a computer monitor. In this way the user is provided with a more easily readable visual display than the one of the mobile telephone. However, this method does not relate to the presentation of displays generated by a presentation application program running on a computer, but only to the transmission of numerical and textual data already existing on the display of the mobile telephone to a larger display monitor.

### Summary

According to the invention the object is achieved in that the method comprises the steps of transmitting instructions to said presentation application program from a portable telecommunications device having an information access program for accessing a global information network, and running a communication application program for communication with said information access program, and for controlling the presentation application program.

In this way the display device can be controlled from the portable telecommunications device instead of a PC, and such a device can be carried considerably more easily than a PC. Actually, the device can be used in a way very similar to the use of a usual remote control unit to a television set, and today almost any professional presenter carries a portable telecommunications device, e.g. in the form of a mobile telephone.

When the global information network is the Internet, and the information access program is a WAP (Wireless Applications Protocol) client, the communication between the portable telecommunications device and the display device can be performed according to the WAP protocol, which is an expedient protocol for the transmission of such instructions.

When the method comprises the step of transmitting said instructions through a short-range radio interface, such as a Bluetooth interface, a wired connection between the portable telecommunications device and the display device can be avoided.

When the method comprises the step of reading data files representing images to be displayed from a removable memory card, a simple way of carrying the data files is achieved, because such memory cards are available in very small sizes. Thus a whole presentation can easily be carried in a wallet.

An expedient embodiment of the invention is achieved when the portable telecommunications device is a mobile telephone.

As mentioned, the invention also relates to a display system comprising a display device capable of providing visual displays from electrical input signals, and a presentation application program adapted to convert data files representing images to be displayed into electrical input signals for said display device. When the system further comprises a portable telecommunications device having an information access program for accessing a global information network, and arranged to transmit instructions to said presentation application program, and a communication application program for communication with said information access program, and for controlling the presentation application program, a system is achieved in which a display device can be controlled by a user without having to carry a PC to the presentation location and without the need to struggle with a good deal of setting up before a presentation can be shown.

When the global information network is the Internet, and the information access program is a WAP (Wireless Applications Protocol) client, the communication between the portable telecommunications device and the display device can be performed according to the WAP protocol, which is an expedient protocol for the transmission of such instructions.

When the system comprises a short-range radio interface, such as a Bluetooth interface, arranged for the transmission of said instructions, a wired connection between the portable telecommunications device and the display device can be avoided.

When the system comprises means for reading data files representing images to be displayed from a removable memory card, a simple way of carrying the data files is achieved, because such memory cards are available in very small sizes. Thus a whole presentation can easily be carried in a wallet.

An expedient embodiment of the invention is achieved when the portable telecommunications device is a mobile telephone.

As mentioned, the invention also relates to a display apparatus comprising a display device capable of providing visual displays from electrical input signals. When the apparatus further comprises a presentation application program adapted to convert data files representing images to be displayed into electrical input signals for said display device, and a communication application program for receiving instructions to said presentation application program from an external device having an information access program for accessing a global information network, and for controlling the presentation application program in accordance with said instructions, an apparatus is achieved in which the display device can be controlled by a user without having to carry a PC to the presentation location and without the need to struggle with a good deal of setting up before a presentation can be shown. Instead the user can control the display device from the external device, which could be a portable telecommunications device.

When the display apparatus comprises a WAP (Wireless Applications Protocol) server adapted to communicate with a WAP client in the external device, the communication between the external device and the display apparatus can be performed according to the WAP protocol, which is an expedient protocol for the transmission of such instructions.

When the display apparatus comprises a short-range radio interface, such as a Bluetooth interface, arranged for the transmission of said instructions, a wired connection between the portable telecommunications device and the display device can be avoided.

An expedient embodiment of the invention is achieved when the display device is a projector accepting a VGA signal input, because such projectors are used in many presentation locations.

As mentioned, the invention also relates to an electronic accessory device for controlling a display device capable of providing visual displays from electrical input signals. When the electronic accessory device comprises a presentation application program adapted to convert data files representing images to be displayed into electrical input signals for said display device, and a communication application program for receiving instructions to said presentation application program from an external device having an information access program for accessing a global information network, and for controlling the presentation application program in accordance with said instructions, a display device is achieved which can be controlled by a user without having to carry a PC to the presentation location and without the need to struggle with a good deal of setting up before a presentation can be shown. Instead the user can control the display device from the external device, which could be a portable telecommunications device.

When the electronic accessory device comprises a WAP (Wireless Applications Protocol) server adapted to communicate with a WAP client in the external device, the communication between the external device and the display apparatus can be performed according to the WAP protocol, which is an expedient protocol for the transmission of such instructions.

When the electronic accessory device comprises a short-range radio interface, such as a Bluetooth interface, arranged for the transmission of said instructions, a wired connection between the portable telecommunications device and the display device can be avoided.

When the electronic accessory device comprises means for reading data files representing images to be displayed from a removable memory card, a simple way of carrying the data files is achieved, because such memory cards are available in very small sizes. Thus a whole presentation can easily be carried in a wallet.

### Brief Description of the Drawings

The invention will now be described more fully below with reference to the drawing, in which
figure 1 shows a first embodiment of the invention with a projector having an integration module,
figure 2 shows an example of an integration module from the projector of figure 1,
figure 3 shows an embodiment in which a separate accessory device is used,
figure 4 shows the use of an infrared interface for communication between the mobile telephone and a separate accessory device,
figure 5 shows the use of a cable for communication between the mobile telephone and a separate accessory device,
figure 6 shows an embodiment in which a memory card interface is located in the separate accessory device,
figure 7 shows an embodiment in which the accessory device is implemented as a plug-in module, and
figure 8 shows an example of a plug-in module from the embodiment of figure 7.

### Detailed Description of Embodiments

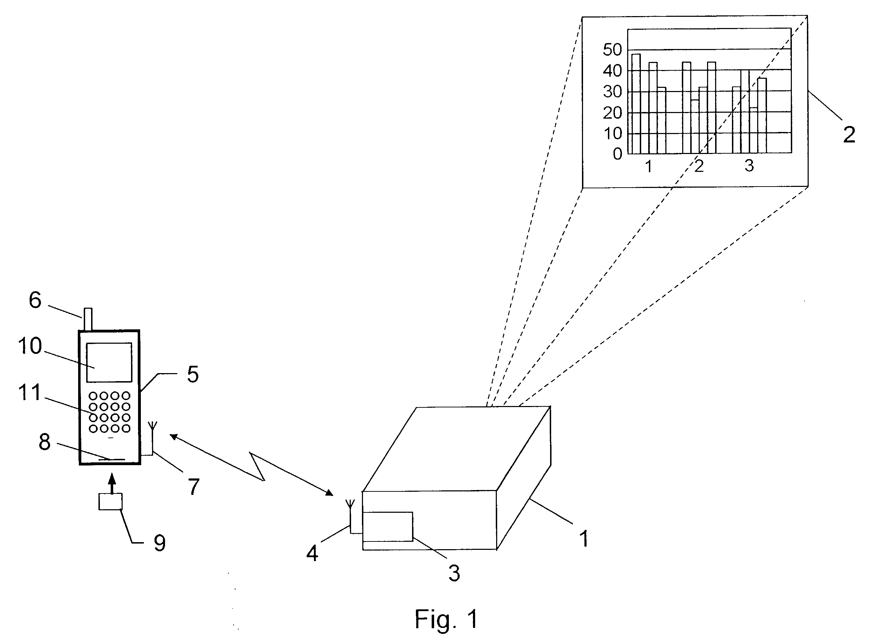

Figure 1 shows an example of how the invention may be implemented. A projector 1 is shown in an active state in which it projects an image 2 on a screen. The projector 1 in itself is of a standard type accepting e.g. a VGA input, which will typically come from a personal computer in prior art systems. The projector is equipped with a light source, an optical system and the electronic circuitry necessary to generate a projected image from the VGA input signal.

Here, however, the projector is further equipped with an integration module 3. This module, which will be described in detail below, is capable of receiving a short-range radio signal, such as a Bluetooth signal, from an antenna 4 and convert this signal into a VGA signal for the projector.

Also shown in figure 1 is a mobile telephone 5 which may be connected in a conventional way to a mobile telecommunications network, e.g. a GSM network (not shown) through an antenna 6 and a base station (not shown) . Further to the antenna 6 the mobile telephone 5 is also equipped with a Bluetooth antenna 7 and Bluetooth circuitry which allows communication with the antenna 4 on the integration module 3 in the projector 1.

The mobile telephone 5 also has a slot 8 into which a memory card 9 may be inserted and data stored thereon may be read.

The mobile telephone 5 has a controller or CPU which is coupled to a user interface (a display 10 and a keypad 11) and a memory comprising an operating system and an information access program in the form of a WAP (Wireless Application Protocol) functionality, i.e. a WAP client and a WAP server. A part of the WAP client is a built-in WAP browser application, which when executed by the controller will form a graphical user interface on the display 10 and allow a user to access a WAP server embedded in the integration module 3 (or any other WAP server).

Thus the integration module 3 of the projector 1 may be controlled from the mobile telephone 5 via WAP over Bluetooth.

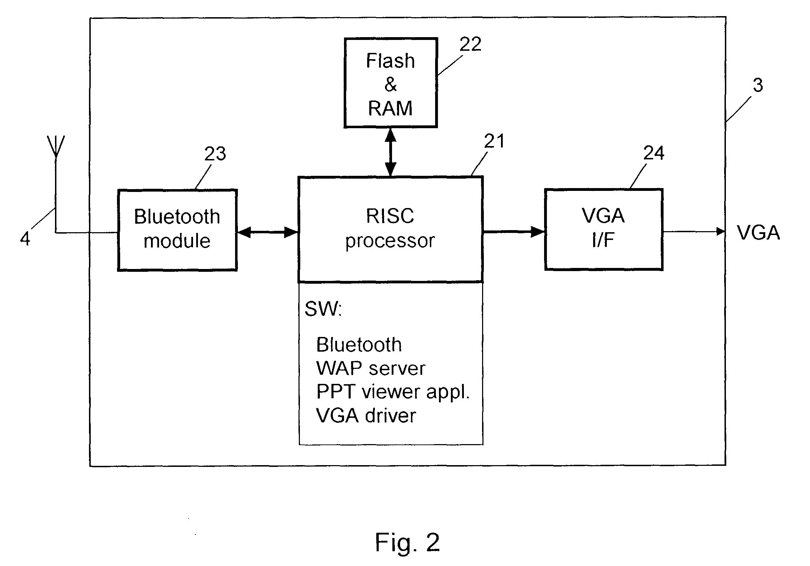

An example of how the integration module 3 could be implemented is shown in more detail in figure 2. The main components are a low power RISC processor 21 (e.g. ARM7) and the memory 22 connected thereto. A Bluetooth module 23 interfaces the processor 21 to the antenna 4, and similarly a VGA interface 24 connects the processor 21 to the VGA output. The VGA signal is delivered (through the VGA interface 24) from a presentation application program or slide show application program (e.g. Microsoft PowerPoint - PPT) running on an operating system (e.g. Windows CE). The software is executed on the low power RISC processor 21. The WAP server and the Bluetooth software is also running on the processor 21.

The slide show application program in the integration module 3 gets the slide show data files (e.g. PPT files) posted from the WAP server in the mobile telephone 5 via WAP and Bluetooth. The phone server, in its turn, fetches the files from the removable memory card 9 inserted in the slot 8 in the phone 5. Everything is controlled from the WAP client in the mobile telephone 5.

Prior to the use of the slide show data files during a presentation as described above, the data files may be generated by means of a similar presentation application program (i.e. PowerPoint) running on a normal PC and then loaded into the removable memory card via a PC adapter. This means that the user can prepare the slides or images on his own PC and then store the corresponding data files on one or more memory cards. These memory cards are then carried to the presentation location, where they are inserted into the slot 9 of the user's WAP telephone 5, and the presentation is ready. The memory cards have a size corresponding to a normal stamp which means that they can be carried in a normal wallet, and the memory capacity normally ranges from 8 to 64 Mbytes with 32 Mbytes as a typical value.

The user no longer needs to carry a PC to the presentation location in order to get the presentation running. Also the struggle with connecting cables and the finding of mains power is avoided. All control mechanisms for the slide show are present in the WAP interface. In this embodiment of the invention a projector equipped with an integration module 3 must be present in the presentation location. This will be the most convenient solution for the presenter, but until such projectors become part of the standard equipment in presentation rooms, the users will not be able to enjoy the full benefit. However, as will be seen below, other embodiments also overcome this problem.

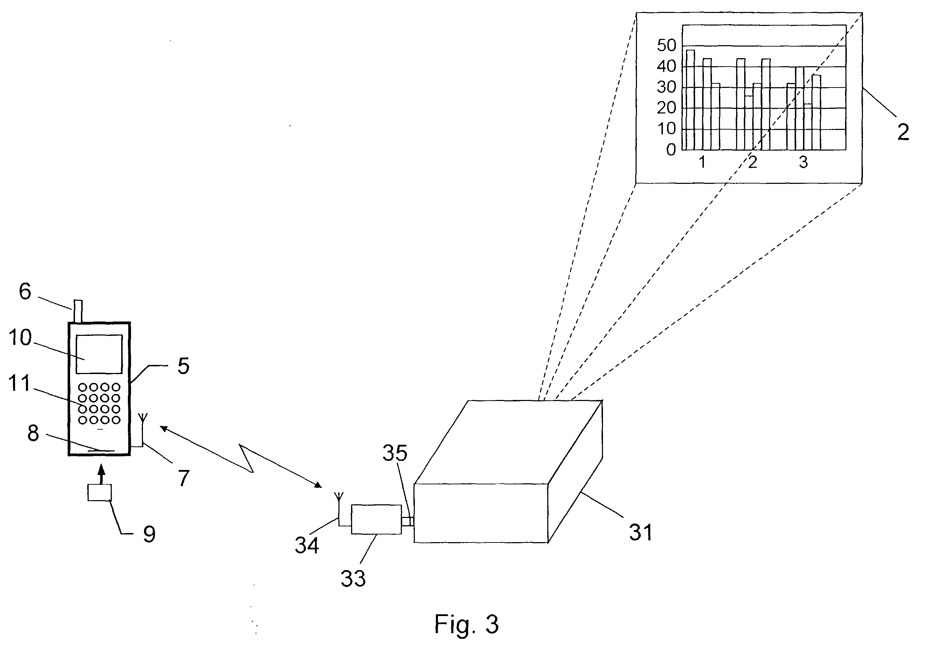

Figure 3 shows an example of such an embodiment. Again a projector 31 projects an image 2 on a screen, but the projector 31 differs from the projector 1 from figure 1 in that it does not include the integration module 3. Thus the projector 31 is a standard projector of the type which is already present in almost any presentation room today. Instead of the integration module 3 an identical module is arranged in a separate accessory device 33 having a Bluetooth antenna 34 similar to the antenna 4 of figure 1. The accessory device 33 is connected to the projector 31 through a connector 35 which connects to the standard VGA input connector of the projector 31. Thus the device 33 can easily be mounted on the projector.

The mobile telephone 5 is identical to that of figure 1, and the projector 31 is controlled from the mobile WAP telephone in exactly the same way as the projector 1. The only difference is that the integration module 3 is now located in the separate device 33. This means that a presenter can now carry his own accessory device 33 to the presentation room. If the room is equipped with a projector with an integration module 3, the projector will be controlled as described in figure 1. If the room is not equipped with such a projector, he just has to mount his own accessory device 33 on the standard projector as shown in figure 3 before the presentation is started.

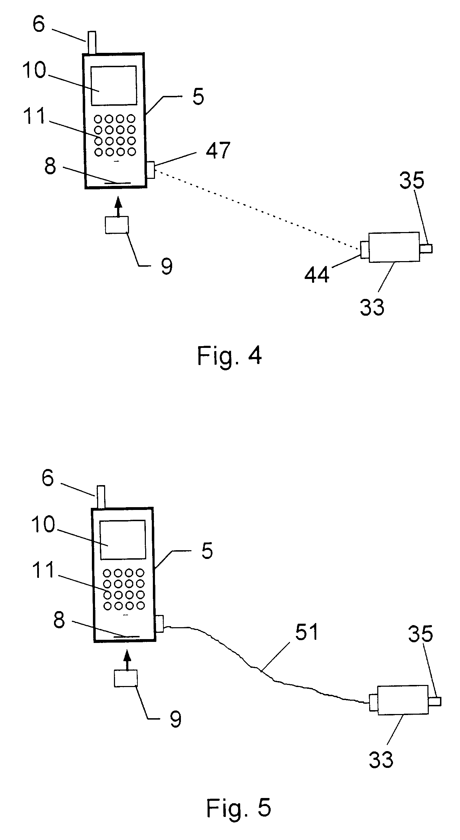

Instead of using Bluetooth communication between the mobile telephone 5 and the integration module 3 or the accessory device 33, several other options are possible. Figures 4 and 5 show two alternatives. In figure 4 the mobile telephone 5 comprises an infrared interface 47, such as an IrDA port, which communicates with a similar interface 44 on the accessory device 33. In figure 5 the mobile telephone 5 and the accessory device 33 are connected to each other through a cable 51. These alternatives are of course also possible with the integration module 3 integrated in the projector like in figure 1.

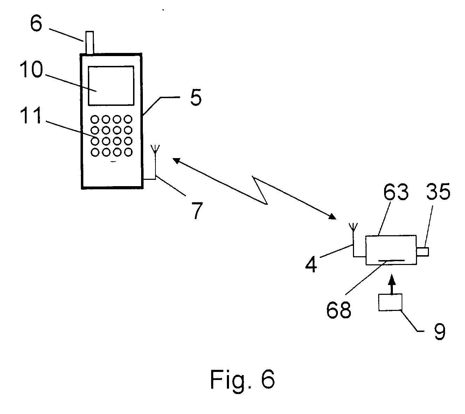

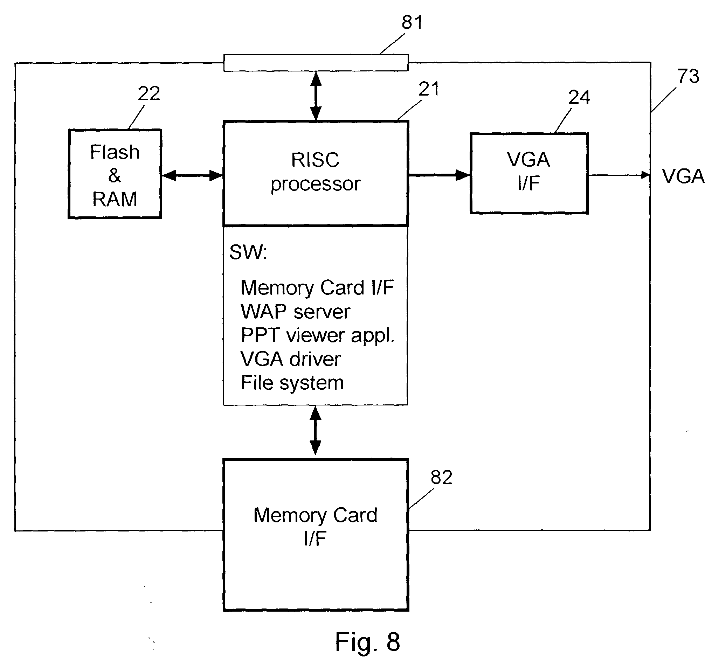

Another possible variation is that the equipment into which the memory cards may be inserted may be placed in the accessory device 33 or the projector 1 instead of the mobile telephone 5. An example thereof is shown in figure 6 in which the accessory device 33 has a slot 68 for insertion of the memory card 9. The memory card interface circuitry and software are then located in the accessory device 33 and are no longer needed in the mobile telephone. Similarly, a WAP server is no longer needed in the phone, because the data files are not transmitted from the phone to the accessory device 33. Thus a WAP client in the phone will be sufficient. An accessory device with memory card interface is shown in figure 8 and will be described below.

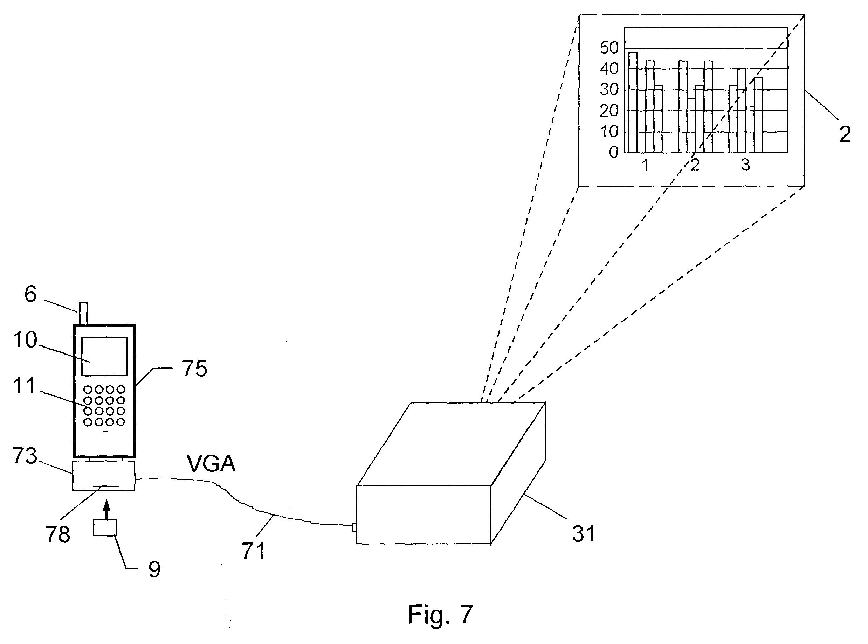

Figure 7 shows a further embodiment of the invention. The accessory device is here implemented as a plug-in module 73 adapted to be connected directly to the system or accessories connector of the mobile telephone 75. The VGA output signal from the module is then connected to the projector 31 through a cable 71. The memory card 9 can be inserted into the slot 78 in the plug-in module 73. Like in figure 6 the phone does not need a memory card interface or a WAP server, because these functionalities are now implemented in the plug-in module 73.

An example of how the plug-in module 73 could be implemented is shown in more detail in figure 8. Like in figure 2, the main components are a low power RISC processor 21 (e.g. ARM7) and the memory 22 connected thereto. A system connector 81 interfaces the processor 21 to the mobile telephone 75, and similarly a VGA interface 24 connects the processor 21 to the VGA output. The VGA signal is delivered (through the VGA interface 24) from a presentation application program or slide show application program (e.g. Microsoft PowerPoint - PPT) running on an operating system (e.g. Windows CE). The software is executed on the low power RISC processor 21. The WAP server and the Bluetooth software also run on the processor 21.

The slide show application program fetches the slide show data files (e.g. PPT files) via the memory card interface 82 from the removable memory card 9 inserted in the slot 78 in the plug-in module 73. A WAP server on the same RISC processor platform executes a WAP application that controls the slide show application, the WAP server is in turn controlled from the built-in WAP client in the mobile telephone 75.

Prior to the use of the slide show data files during a presentation as described above, the data files may be generated by means of a similar presentation application program (i.e. PowerPoint) running on a normal PC and then loaded into the removable memory card via a PC adapter.

Although a preferred embodiment of the present invention has been described and shown, the invention is not restricted to it, but may also be embodied in other ways within the scope of the subject-matter defined in the following claims. Thus as an example, another information access program may be used instead of WAP to control the presentation application program. Also another type of input signal to the display device may be used instead of the VGA signal. Finally, the data files may be downloaded to the mobile telephone through the network (e.g. GSM) instead of reading them from the memory cards, which would improve the flexibility.

## Claims

1. A method of controlling a display device (1; 31), capable of providing visual displays (2) from electrical input signals, by means of a presentation application program adapted to convert data files representing images to be displayed into electrical input signals for said display device, **characterized in that** it comprises the steps of:
• transmitting instructions to said presentation application program from a portable telecommunications device (5; 75) having an information access program for accessing a global information network, and
• running a communication application program for communication with said information access program, and for controlling the presentation application program.

2. A method according to claim 1, **characterized in that** the global information network is the Internet, and the information access program is a WAP (Wireless Applications Protocol) client.

3. A method according to claim 1 or 2, **characterized in that** it comprises the step of transmitting said instructions through a short-range radio interface (4, 7), such as a Bluetooth interface.

4. A method according to any one of claims 1 to 3, **characterized in that** it comprises the step of reading data files representing images to be displayed from a removable memory card (9).

5. A method according to any one of claims 1 to 4, **characterized in that** the portable telecommunications device (5; 75) is a mobile telephone.

6. A display system comprising
a display device (1; 31) capable of providing visual displays (2) from electrical input signals, and
a presentation application program adapted to convert data files representing images to be displayed into electrical input signals for said display device (1; 31), **characterized in that** it further comprises:
• a portable telecommunications device (5; 75) having an information access program for accessing a global information network, and arranged to transmit instructions to said presentation application program, and
• a communication application program for communication with said information access program, and for controlling the presentation application program.

7. A display system according to claim 6, **characterized in that** the global information network is the Internet, and the information access program is a WAP (Wireless Applications Protocol) client.

8. A display system according to claim 6 or 7, **characterized in that** it comprises a short-range radio interface (4, 7), such as a Bluetooth interface, arranged for the transmission of said instructions.

9. A display system according to any one of claims 6 to 8, **characterized in that** it comprises means (8; 68; 78; 82) for reading data files representing images to be displayed from a removable memory card (9).

10. A display system according to any one of claims 6 to 9, **characterized in that** the portable telecommunications device (5; 75) is a mobile telephone.

11. A display apparatus (1) comprising a display device capable of providing visual displays (2) from electrical input signals, **characterized in that** it further comprises:
• a presentation application program adapted to convert data files representing images to be displayed into electrical input signals for said display device, and
• a communication application program for receiving instructions to said presentation application program from an external device (5; 75) having an information access program for accessing a global information network, and for controlling the presentation application program in accordance with said instructions.

12. A display apparatus according to claim 11, **characterized in that** it comprises a WAP (Wireless Applications Protocol) server adapted to communicate with a WAP client in the external device.

13. A display apparatus according to claim 11 or 12, **characterized in that** it comprises a short-range radio interface (4, 7), such as a Bluetooth interface, arranged for the transmission of said instructions.

14. A display apparatus according to any one of claims 11 to 13, **characterized in that** the display device is a projector accepting a VGA signal input.

15. An electronic accessory device (33; 63; 73) for controlling a display device (31) capable of providing visual displays (2) from electrical input signals, **characterized in that** it comprises:
• a presentation application program adapted to convert data files representing images to be displayed into electrical input signals for said display device (31),
• a communication application program for receiving instructions to said presentation application program from an external device (5; 75) having an information access program for accessing a global information network, and for controlling the presentation application program in accordance with said instructions.

16. An electronic accessory device according to claim 15, **characterized in that** it comprises a WAP (Wireless Applications Protocol) server adapted to communicate with a WAP client in the external device.

17. An electronic accessory device according to claim 15 or 16, **characterized in that** it comprises a short-range radio interface (4, 7), such as a Bluetooth interface, arranged for the transmission of said instructions.

18. An electronic accessory device according to any one of claims 15 to 17, **characterized in that** it comprises means (68; 78; 82) for reading data files representing images to be displayed from a removable memory card (9).
